# EUROPÄISCHE PATENTSCHRIFT

(11) **EP 3 488 089 B1**
(45) Veröffentlichungstag und Bekanntmachung des Hinweises auf die Patenterteilung: **02.09.2020**
(21) Anmeldenummer: 17740740.0
(22) Anmeldetag: 18.07.2017
(51) Int. Cl.: F01N 13/00, F01N 13/08, F01N 3/05, F01P 5/02, B63G 13/02

(54) **ABGASAUSSTOSSVORRICHTUNG FÜR EIN WASSERFAHRZEUG**
EXHAUST EMISSION DEVICE FOR A MARINE VESSEL
DISPOSITIF D'EMISSION DE GAZ D'ÉCHAPPEMENT POUR UN NAVIRE

(30) Priorität: 21.07.2016 DE 102016213381
(43) Veröffentlichungstag der Anmeldung: 29.05.2019
(73) Patentinhaber: thyssenkrupp Marine Systems GmbH, 24143 Kiel (DE); thyssenkrupp AG, 45143 Essen (DE)
(72) Erfinder: THIEME, Christian, 19258 Nieklitz (DE)
(74) Vertreter: thyssenkrupp Intellectual Property GmbH
(86) Internationale Anmeldenummer: PCT/EP2017/068076
(87) Internationale Veröffentlichungsnummer: WO 2018/015358

(56) Entgegenhaltungen:
- WO-A1-2009/078845
- DE-A1- 3 743 798
- JP-A- H05 171 917
- US-A1- 2007 245 725
- US-A1- 2009 139 217

## Beschreibung

Die Erfindung betrifft eine Vorrichtung zur Verringerung der Wärmesignatur eines Fahrzeugs, insbesondere eines Wasserfahrzeugs.

Energie wird in Fahrzeugen, beispielsweise Wasserfahrzeugen, zum Beispiel Korvetten oder Fregatten, üblicherweise mittels Verbrennungsmotoren, beispielsweise aus Diesel oder Gas, gewonnen. Bei der Verbrennung entstehen bekannter Maßen heiße Abgase. Diese Abgase werden in die Umluft abgegeben. Hierdurch entstehen warme Bereiche in der Luft und auch die Umgebung, in welcher die Luft austritt, erwärmt sich regelmäßig. Hierdurch ist eine Ortung des Fahrzeuges im Infrarotbereich sehr leicht möglich.

Daher wird regelmäßig versucht, den Abgasstrom abzukühlen, bevor dieser an die Umgebung abgegeben wird und so die Signatur des Fahrzeuges zu verringern. Insbesondre in einer Gefechtssituation kann dieses von besonderer Bedeutung sein.

Aus der EP 1022 445 A1 ist ein Abgasleitungssystem mit zwei im Wesentlichen aufeinanderfolgenden Gasleitungen bekannt.

Aus der US 4,214,441 ist eine Abgaskühlung bekannt, bei der kalte Luft durch Löcher und Ringe in den Abgasstrom geführt wird.

Aus der WO 2006 / 088 437 A2 ist eine Abgasvorrichtung mit einer ersten und einer zweiten Düse bekannt.

Aus der US 2009 / 139 217 A1 ist eine Abgasvorrichtung für ein Kraftfahrzeug bekannt.

Aus der EP 1 770 249 A1 ist ein Abgasdiffusor bekannt.

Aus der US 2008 / 129 053 A1 ist eine Abgasmischvorrichtung bekannt.

Aus der US 5,826,428 A ist ein Brenner bekannt.

Aus der WO 2009 / 078 845 A1 ist eine Vorrichtung zur Kühlung von Abgas bekannt.

Nachteil dieser Formen ist, dass diese regelmäßig einen vergleichsweise großen Strömungswiderstand aufweisen, welcher den Abgasstrom bremst und eine Gegenkraft auf den Motor erzeugt bzw. eine aktive Förderung im Gasstrom erfordert.

Aufgabe der Erfindung ist es, eine Vorrichtung für ein Wasserfahrzeug bereitzustellen, bei welcher ein Optimum aus Strömungswiderstand, Kühlung des Abgasstromes, Wirtschaftlichkeit und Robustheit der Vorrichtung und somit eine effiziente Reduzierung der Wärmesignatur ermöglicht.

Gelöst wird diese Aufgabe durch eine Abgasausstoßvorrichtung für ein Wasserfahrzeug mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Abgasausstoßvorrichtung für ein Wasserfahrzeug weist ein erstes Rohr auf, wobei heißes Abgas durch das erste Rohr leitbar ist. Das erste Rohr weist einen kreisförmigen oder elliptischen Querschnitt auf, wobei der Radius des ersten Rohres in Abhängigkeit von der Höhe variieren kann. Im Inneren des ersten Rohres ist ein zweites Rohr angeordnet. Das zweite Rohr ist nach unten geschlossen. Das zweite Rohr weist einen kreisförmigen oder elliptischen Querschnitt auf, wobei der Radius des zweiten Rohres in Abhängigkeit von der Höhe variieren kann. Der Radius des ersten Rohres ist größer als der Radius des zweiten Rohres. Umgebungsluft ist durch das zweite Rohr leitbar. Oberhalb des zweiten Rohres und innerhalb des ersten Rohres ist ein erster Diffusorring angeordnet. Damit Abgas aus dem ersten Rohr austreten kann ergibt sich somit, dass der Radius des ersten Rohres bei einer gegebenen Höhe größer ist als der Radius des zweiten Rohres. Es ergibt sich somit ein erster Luftspalt, durch den das Abgas strömen kann, wobei der erste Luftspalt die Dicke der Differenz zwischen dem Radius des ersten Rohres und dem Radius des zweiten Rohres aufweist. Da die Radien abhängig von der Höhe sein können, kann auch die Dicke des ersten Luftspalts höhenabhängig sein. Vorzugsweise beträgt die Dicke des ersten Luftspalts wenigstes 3 %, weiter bevorzugt wenigstes 8 %, besonders bevorzugt wenigstens 15 % des Radius des ersten Rohres. Vorzugsweise beträgt die Dicke des ersten Luftspalts höchstens 80 %, weiter bevorzugt wenigstens 60 %, besonders bevorzugt wenigstens 35 % des Radius des ersten Rohres. Der erste Diffusorring weist einen kreisförmigen oder elliptischen Querschnitt auf. Der der Radius des ersten Diffusorrings ist an der dem zweiten Rohr benachbarten Seite größer als der Radius des zweiten Rohres (20) an der dem ersten Diffusorring (30) benachbarten Seite. Hierdurch entsteht ein Spalt, sodass das heiße Abgass nicht nur außen um den ersten Diffusorring strömt, sondern auch auf die Innenseite des Diffusorringes gelangt. Der Diffusorring wird somit beidseitig von heißem Abgas angeströmt, wobei das Abgas auf der Innenseite sich bereits mit der kalten Umgebungsluft vermischt, welche über das zweite Rohr zugeführt wird.

Die durch das zweite Rohr leitbare Umgebungsluft dient der Abkühlung des Abgasstromes im ersten Rohr. Um eine Vermischung der beiden Luftströme zu erreichen ohne einen großen Strömungswiderstand zu erreichen ist ein Diffusorring oberhalb des zweiten Rohres angeordnet.

In einer weiteren Ausführungsform der Erfindung fallen die Symmetrieachse des ersten Rohres und die Symmetrieachse des zweiten Rohres zusammen.

In einer weiteren Ausführungsform der Erfindung ist das zweite Rohr am unteren Ende spitz zulaufend. Beispielsweise ist das untere Ende des zweiten Rohres kegelförmig ausgebildet.

In einer weiteren Ausführungsform der Erfindung ist das zweite Rohr am unteren Ende abgerundet. Beispielsweise ist das untere Ende des zweiten Rohres halbkugelförmig. Diese Form bildet sich zum Beispiel auch bei Tropfen aus und ist besonders strömungsgünstig.

In einer weiteren Ausführungsform der Erfindung weist der Radius des ersten Diffusorrings in Abhängigkeit von der Höhe variieren kann. Die Symmetrieachse des ersten Diffusorrings und die Symmetrieachse des zweiten Rohres fallen zusammen.

In einer weiteren Ausführungsform der Erfindung ist die Form des Diffusorrings derart gewählt, dass seine innere Fläche wenigstens stellenweise parallel zur oberen Umfangsfläche des zweiten Rohrs verläuft. Besonders bevorzugt ist nur die untere Umfangsfläche des Diffusorrings parallel zur oberen Umfangsfläche des zweiten Rohres.

In einer weiteren Ausführungsform der Erfindung nimmt der Radius des ersten Diffusorrings von unten nach oben zu. Durch die Zunahme des Radius entsteht eine nach Außen gewölbte Form des Diffusorrings, im Querschnitt analog einer Tragflächenoberfläche. Hierdurch kommt es zu einer Verstärkung des Vermischungseffekts durch den Diffusorring. Es ergibt sich ein Druckunterschied zwischen dem inneren und dem äußeren Bereich des Diffusorrings. Durch die gewölbte Form strömt die Luft auf der Innenseite schneller, sodass analog zum Flugzeugflügel ein geringerer Druck entsteht. Durch diesen Druckunterschied kommt es zu einer effizienten Ansaugung der Umgebungsluft aus dem zweiten Rohr in das Innere des Diffusorrings, ohne dass eine aktive Luftzuführung in das zweite Rohr notwendig ist. Bevorzugt ist die Fläche des Diffusorrings nach außen gewölbt. Besonders bevorzugt lassen sich die Wölbung der inneren Fläche und der äußeren Fläche durch quadratische Funktionen annähern, wobei die Funktionen unterschiedlich zueinander sind. Zusätzlich kann zur Verstärkung das erste Rohr nach Innen gewölbt sein, wodurch es zu einer weiteren Drucksteigerung im äußeren Bereich zwischen dem ersten Rohr und dem Diffusorring kommt. Zusätzlich führt dieses dazu, dass das heiße Abgas zwischen dem ersten Rohr und dem Diffusorring beschleunigt wird. Hierdurch bildet sich hinter dem Diffusorring ein äußerer ringförmiger Gasstrom an der Wandseite, welche besonders beschleunigt ist. Hierdurch ergibt sich beim Austritt des Gasstroms aus dem ersten Rohr ein Effekt, welcher dem einer Wasserstrahlpumpe gleicht und zu einer effizienten Vermischung durch Mitnahme von das erste Rohr umgebender Umgebungsluft führt.

In einer weiteren Ausführungsform der Erfindung ist der Diffusorring am unteren Ende abgerundet und am oberen Ende spitz ausgeformt.

In einer weiteren Ausführungsform der Erfindung ist der Radius des ersten Rohres bei einer gegebenen Höhe größer ist als der Radius des Diffusorrings. Es ergibt sich somit ein zweiter Luftspalt, durch den das Abgas strömen kann, wobei der zweite Luftspalt die Dicke der Differenz zwischen dem Radius des ersten Rohres und dem Radius des Diffusorrings aufweist. Da die Radien abhängig von der Höhe sein können, kann auch die Dicke des zweiten Luftspalts höhenabhängig sein. Vorzugsweise beträgt die Dicke des zweiten Luftspalts wenigstes 2 %, weiter bevorzugt wenigstes 5 %, besonders bevorzugt wenigstens 10 % des Radius des ersten Rohres. Vorzugsweise beträgt die Dicke des zweiten Luftspalts höchstens 80 %, weiter bevorzugt wenigstens 60 %, besonders bevorzugt wenigstens 35 % des Radius des ersten Rohres.

In einer weiteren Ausführungsform der Erfindung oberhalb des ersten Rohres ist ein drittes Rohr angeordnet. Das dritte Rohr weist einen kreisförmigen oder elliptischen Querschnitt auf, wobei der Radius des dritten Rohres in Abhängigkeit von der Höhe variieren kann. Der Radius des dritten Rohres ist größer als der Radius des ersten Rohres. Die Symmetrieachse des ersten Rohres und die Symmetrieachse des dritten Rohres fallen zusammen. Durch die Verwendung eines dritten Rohres kommt es zu einer weiteren Durchmischung zwischen dem heißen Abgas, welches mit dem aus der äußeren Umgebung kommenden kalten Luft hierdurch weiter durchmischt und abgekühlt wird. Es kommt somit zu einer ersten Abkühlung im Kern durch die durch das zweite Rohr geleitete Kaltluft sowie durch die von der Außenseite zugeführte Kaltluft im dritten Rohr.

In einer weiteren Ausführungsform der Erfindung ist oberhalb des dritten Rohres ein viertes Rohr angeordnet. Das vierte Rohr weist einen kreisförmigen oder elliptischen Querschnitt auf, wobei der Radius des vierten Rohres in Abhängigkeit von der Höhe variieren kann. Der kleinste Radius des vierten Rohres ist größer als der größte Radius des dritten Rohres, wobei die Symmetrieachse des dritten Rohres und die Symmetrieachse des vierten Rohres zusammenfallen. Das dritte Rohr kann teilweise innerhalb des vierten Rohres angeordnet sein. Das dritte Rohr kann alternativ oder zusätzlich auch am oberen Ende verjüngt ausgeführt sein. Durch die zusätzliche Verwendung eines vierten Rohres mit größerem Durchmesser, bildet sich ein Luftspalt zwischen dem dritten und vierten Rohr über den Umgebungsluft in den Abgasstrom zugeführt wird. Es kommt zu einer zweiten Vermischungsstufe mit kalter Umgebungsluft zu einer weiteren Abkühlung des Abgases. In einer Weiterbildung der Erfindung ist noch ein fünftes Rohr oberhalb des vierten Rohr angeordnet und weist in analoger Weise einen größeren Radius als das vierte Rohr auf. Es bildet sich ein weiterer Luftspalt, durch den eine weitere Durchmischung erreicht werden kann.

In einer weiteren Ausführungsform der Erfindung sind wenigstens drei Luftzuführungen so angeordnet, dass diese Luft von außerhalb des ersten Rohres in des Innere des zweiten Rohres leiten. Die Luftzuführung kann beispielsweise in der Form eines Rohres ausgeführt sein. Durch die Luftzuführung kann kalte Umgebungsluft in das zweite Rohr gelangen, um den Kern das Abgasstromes abzukühlen, ohne vorher mit Abgas vermischt worden zu sein. Gleichzeitig stellen wenige, beispielsweise drei Luftzuführungen, nur einen geringen Strömungswiderstand dar.

In einer weiteren Ausführungsform der Erfindung dienen die wenigstens drei Luftzuführungen zur Stütze des zweiten Rohres. Um das zweite Rohr im Inneren des ersten Rohres zu halten, ist eine Stützung notwendig. Wird die Stützung durch die Luftzuführung übernommen, entfallen weitere Bauteile, sodass weniger Strömungswiderstand entsteht.

In einer weiteren Ausführungsform der Erfindung weisen die Luftzuführungen einen tropfenförmigen Querschnitt auf. Der tropfenförmige Querschnitt (unten rund und breit, oben spitz zulaufend) ist strömungsoptimiert und führt weiter dazu, dass dem Abgasstrom ein möglichst geringer Strömungswiderstand entgegensteht.

In einer weiteren Ausführungsform der Erfindung sind die wenigstens drei Luftzuführungen derart ausgebildet, dass der durch das erste Rohr strömende Abgasstrom durch die wenigstens drei Luftzuführungen in Rotation versetzt wird. Hierzu weisen die Luftzuführungen einen von der Rotationssymmetrie abweichenden Querschnitt auf. Insbesondere kann der Querschnitt analog einer Tragfläche geformt werden und somit eine Saug- und eine Druckseite aufweisen. Die Luftzuführungen sind dabei vorteilhafter Weise derart angeordnet, dass die Saugseite einer Luftzuführung zur Druckseite einer anderen Luftzuführung benachbart ist, wodurch sich eine Kreisbewegung im Abgasstrom ergibt.

In einer weiteren Ausführungsform der Erfindung weist die Abgasausstoßvorrichtung eine Fördervorrichtung auf, wobei die Fördervorrichtung zum Fördern von Luft durch die Luftzuführungen ausgebildet ist. Neben dem rein passiven Betrieb, in dem durch die Strömung des Abgases die kalte Umgebungsluft angesaugt wird, kann die kalte Umgebungsluft auch aktiv gefördert werden. Hierdurch erfolgt eine deutlich stärkere Abkühlung des Abgasstromes. Dieses hat jedoch auch einige Nachteile. Zum einen kommt es durch die zusätzliche aktive geförderte Gasmenge zu einem erhöhten Gegendruck gegen das Abgas. Zum anderen steigen Kosten und Verschleiß. Daher kann beispielsweise eine Fördervorrichtung vorgesehen sein, welche jedoch im Regelbetrieb nicht aktiv fördert und erst in einer Gefechtssituation aktiv hinzugeschaltet wird, um kurzfristig einen maximalen Kühlungseffekt zu erzielen.

In einer weiteren Ausführungsform der Erfindung ist oberhalb des ersten Diffusorring und innerhalb des ersten Rohres einen zweiter Diffusorring angeordnet. Weist die Abgasausstoßvorrichtung ein drittes Rohr auf, so ist der zweite Diffusorring vorzugsweise zwischen dem ersten Diffusorring und dem dritten Rohr angeordnet.

In einer weiteren Ausführungsform der Erfindung eine Abgasausstoßvorrichtung mit einer Wassereinspritzvorrichtung. Die Wassereinspritzung kann an einer oder an mehreren Stellen erfolgen. Vorteil der Wassereinspritzung ist die extrem effiziente Kühlung, zum einen durch die sehr hohe Wärmekapazität von Wasser zum anderen durch die Ausnutzung der ebenfalls vergleichsweise hohen Verdampfungsenthalphie. Nachteilig sind jedoch die Kosten, sowie die ständige Anwesenheit von Wasser im Bereich. Daher wird eine Wassereinspritzung vorzugsweise nur optional hinzugeschaltet, wenn eine intensive Kühlung, beispielsweise im Gefechtsfall, unerlässlich ist.

In einem weiteren Aspekt betrifft die Erfindung ein Wasserfahrzeug mit einer erfindungsgemäßen Abgasausstoßvorrichtung, bevorzugt handelt es sich um ein militärisches Wasserfahrzeug.

In einem weiteren Aspekt betrifft die Erfindung ein Verfahren zum Betreiben einer Abgasausstoßvorrichtung, wobei die Abgasausstoßvorrichtung über eine Fördervorrichtung zum Fördern von Luft und eine Wassereinspritzvorrichtung aufweist. Die Vorrichtung kann in vier prinzipiellen Betriebszuständen gefahren werden. Im rein passiven Betrieb erfolgt weder aktive Förderung von Luft noch eine Wassereinspritzung. Im aktiven Betrieb erfolgt eine aktive Förderung von Luft, jedoch keine Wassereinspritzung. Im Intensivbetrieb erfolgt eine aktive Förderung von Luft und eine Wassereinspritzung. Im Feuchtbetrieb erfolgt nur eine Wassereinspritzung aber keine aktive Förderung von Luft. Das Verfahren umfasst in einem ersten Verfahrensschritt die Vorgabe der Einsatzparameter. In einem zweiten Schritt wird der zu den Einsatzparametern passende Betriebszustand ausgewählt.

Beispielsweise wird als Einsatzparameter die einfache Überführungsfahrt vorgegeben. In diesem Fall sind ökonomische Gesichtspunkte überwiegend, so dass der passive Betrieb ausgewählt wird. Wird als Einsatzparameter eine Überwachungsfahrt ausgewählt, so ist für einen langen Zeitraum die Signatur so gering wie möglich zu halten, der Betrieb jedoch für eine möglichst lange Standzeit auf See auszulegen. Daher wird für diesen Fall der aktive Betrieb ausgewählt. In einer Gefechts- oder Beschusssituation ist die Minimierung der Signatur absolut vorranging, sodass in diesem Fall der Intensivbetrieb ausgewählt wird.

Nachfolgend ist die erfindungsgemäße Abgasausstoßvorrichtung anhand eines in den Zeichnungen dargestellten Ausführungsbeispiels näher erläutert.
- Fig. 1: Querschnitt durch eine erste Abgasausstoßvorrichtung
- Fig. 2: Querschnitt durch eine zweite Abgasausstoßvorrichtung
- Fig. 3: Querschnitt durch eine dritte Abgasausstoßvorrichtung
- Fig. 4: Querschnitt durch eine vierte Abgasausstoßvorrichtung
- Fig. 5: Schematische Ansicht einer fünften Abgasausstoßvorrichtung

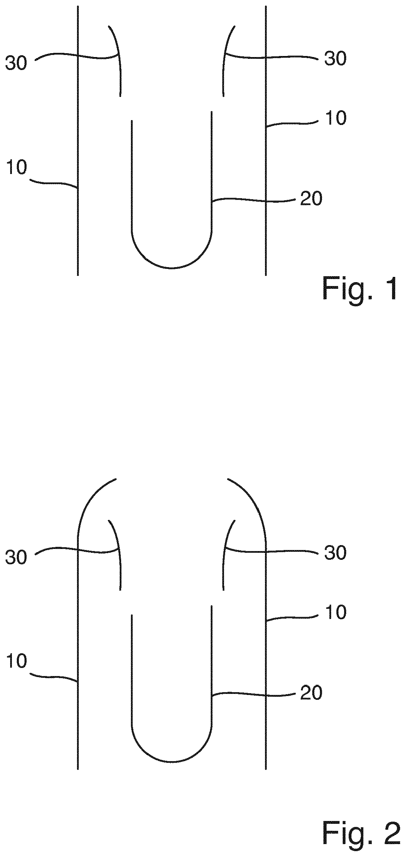

In Fig. 1 ist eine erste Abgasausstoßvorrichtung in einem Querschnitt gezeigt. Die Abgasausstoßvorrichtung besteht aus einem ersten Rohr 10, in welches von unten heißes Abgas eingeleitet wird und aus dem oben gekühltes Abgas ausgestoßen wird. In dem ersten Rohr 10 ist ein zweites Rohr 20 angeordnet. Dieses ist nach unten geschlossen und nach oben geöffnet. Durch den Gasstrom des warmen Abgases wird kalte Luft aus dem zweiten Rohr 20 mitgerissen. Alternativ oder zusätzlich kann aus dem zweiten Rohr 20 auch aktiv kalte Luft gefördert werden. Oberhalb des zweiten Rohres 20 ist ein erster Diffusorring 30 angeordnet.

Fig. 2 zeigt eine zweite Abgasausstoßvorrichtung, welche mit der ersten Abgasausstoßvorrichtung vergleichbar ist. Einziger Unterschied ist, dass das erste Rohr 10 nach oben eine Verengung aufweist, um die Strömungsgeschwindigkeit beim Austritt zu steigern.

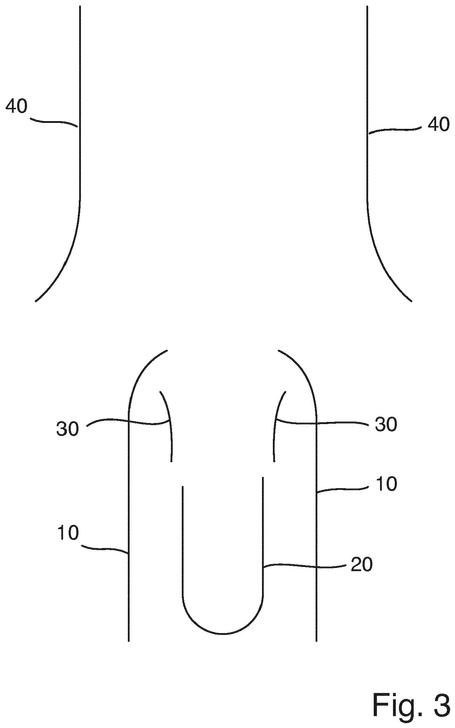

In Fig. 3 ist eine dritte Abgasausstoßvorrichtung gezeigt, welche zusätzlich zur zweiten Abgasausstoßvorrichtung ein drittes Rohr 40 aufweist. Vorteilhafter Weise ist das dritte Rohr 40 an seiner Unterseite wie gezeigt etwas erweitert, um zusätzlich mehr kalte Umgebungsluft einzusaugen.

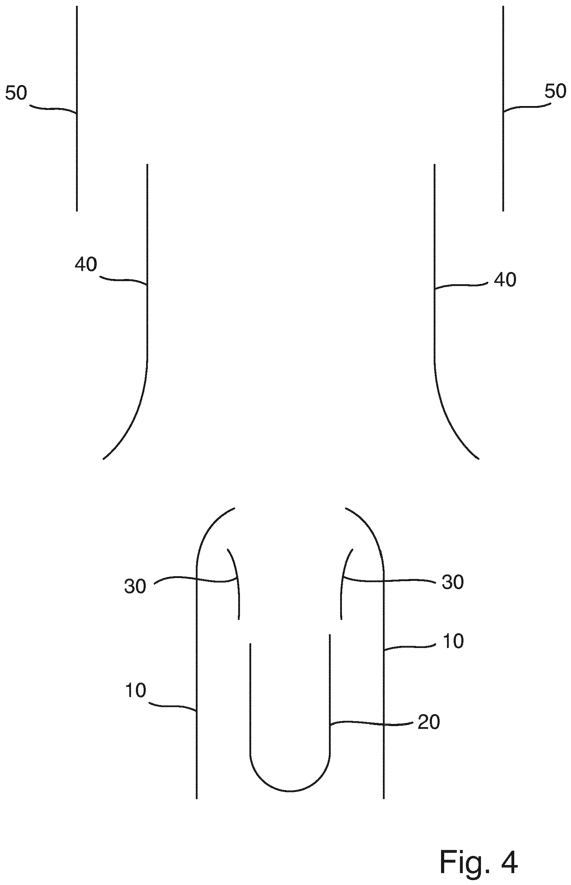

Als weitere Ausgestaltung ist in Fig. 4 eine vierte Abgasausstoßvorrichtung gezeigt, welche zusätzlich zur dritten Abgasausstoßvorrichtung ein viertes Rohr 50 aufweist, wobei das dritte Rohr 40 teilweise innerhalb des vierten Rohres 50 angeordnet ist. Hierdurch wird in einer weiteren Stufe kalte Umgebungsluft angesogen.

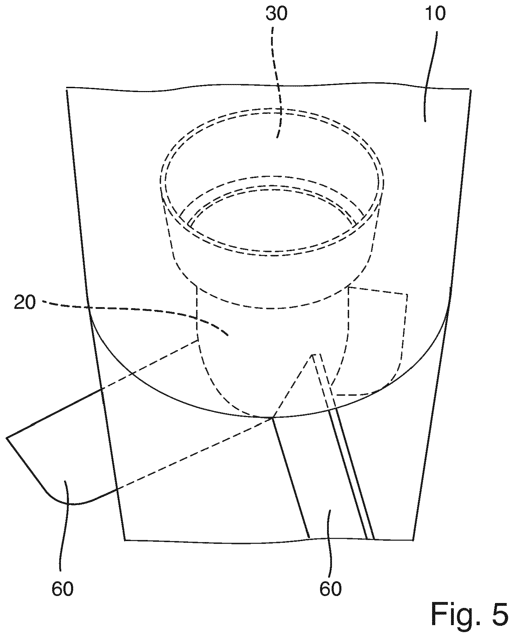

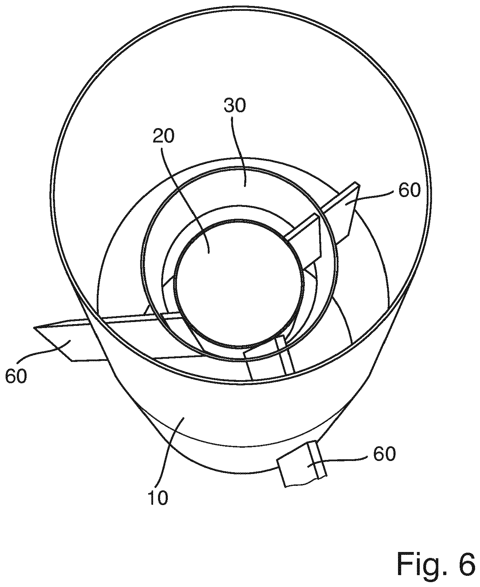

Fig. 5 zeigt eine fünfte Abgasausstoßvorrichtung. Das zweite Rohr 20 ist innerhalb des ersten Rohres 10 angeordnet und wird über drei Luftzuführungen 60 mit kalter Luft versorgt. Hierbei kann die kalte Luft passiv oder aktiv durch die Luftzuführungen 60 strömen. Die Luftzuführungen 60 tragen dabei das zweite Rohr 20 innerhalb des ersten Rohres 10. Oberhalb des zweiten Rohres 20 ist der erste Diffusorring 30 angeordnet.

Bezugszeichen
- 10: erstes Rohr
- 20: zweites Rohr
- 30: erster Diffusorring
- 40: drittes Rohr
- 50: viertes Rohr
- 60: Luftzuführung

## Patentansprüche

1. Abgasausstoßvorrichtung für ein Wasserfahrzeug, wobei die Abgasausstoßvorrichtung ein erstes Rohr (10) aufweist, wobei heißes Abgas durch das erste Rohr (10) leitbar ist, wobei das erste Rohr (10) einen kreisförmigen oder elliptischen Querschnitt aufweist, wobei der Radius des ersten Rohres (10) in Abhängigkeit von der Höhe variieren kann, wobei im Inneren des ersten Rohres (10) ein zweites Rohr (20) angeordnet ist, wobei das zweite Rohr (20) nach unten geschlossen ist, wobei das zweite Rohr (20) einen kreisförmigen oder elliptischen Querschnitt aufweist, wobei der Radius des zweiten Rohres (20) in Abhängigkeit von der Höhe variieren kann, wobei der Radius des ersten Rohres (10) größer ist als der Radius des zweiten Rohres (20), wobei Umgebungsluft durch das zweite Rohr (20) leitbar ist, **dadurch gekennzeichnet, dass** oberhalb des zweiten Rohres (20) und innerhalb des ersten Rohres ein erster Diffusorring (30) angeordnet ist, wobei der erste Diffusorring (30) einen kreisförmigen oder elliptischen Querschnitt aufweist, wobei der Radius des ersten Diffusorrings (30) an der dem zweiten Rohr (20) benachbarten Seite größer ist als der Radius des zweiten Rohres (20) an der dem ersten Diffusorring (30) benachbarten Seite.

2. Abgasausstoßvorrichtung nach Anspruch 1, **dadurch gekennzeichnet, dass** der Radius des ersten Diffusorrings (30) in Abhängigkeit von der Höhe variieren kann und wobei die Symmetrieachse des ersten Diffusorrings (30) und die Symmetrieachse des zweiten Rohres (20) zusammenfallen.

3. Abgasausstoßvorrichtung nach Anspruch 3, **dadurch gekennzeichnet, dass** der Radius des ersten Diffusorrings (30) von unten nach oben zunimmt.

4. Abgasausstoßvorrichtung nach einem der vorstehenden Ansprüche, **dadurch gekennzeichnet, dass** oberhalb des ersten Rohres (10) ein drittes Rohr (40) angeordnet ist, wobei das dritte Rohr (40) einen kreisförmigen oder elliptischen Querschnitt aufweist, wobei der Radius des dritten Rohres (40) in Abhängigkeit von der Höhe variieren kann, wobei der Radius des dritten Rohres (40) größer ist als der Radius des ersten Rohres (10), wobei die Symmetrieachse des ersten Rohres (10) und die Symmetrieachse des dritten Rohres (40) zusammenfallen.

5. Abgasausstoßvorrichtung nach Anspruch 4, **dadurch gekennzeichnet, dass** oberhalb des dritten Rohres (40) ein viertes Rohr (50) angeordnet ist, wobei das vierte Rohr (50) einen kreisförmigen oder elliptischen Querschnitt aufweist, wobei der Radius des vierten Rohres (50) in Abhängigkeit von der Höhe variieren kann, wobei der Radius des vierten Rohres (50) größer ist als der Radius des dritten Rohres (40), wobei die Symmetrieachse des dritten Rohres (40) und die Symmetrieachse des vierten Rohres (50) zusammenfallen, wobei das dritte Rohr (40) teilweise innerhalb des vierten Rohres (50) angeordnet ist.

6. Abgasausstoßvorrichtung nach einem der vorstehenden Ansprüche, **dadurch gekennzeichnet, dass** das wenigstens drei Luftzuführungen (60) so angeordnet sind, dass diese Luft von außerhalb des ersten Rohres (10) in des Innere des zweiten Rohres (20) leiten.

7. Abgasausstoßvorrichtung Anspruch 6, **dadurch gekennzeichnet, dass** die wenigstens drei Luftzuführungen (60) zur Stütze des zweiten Rohres (20) dienen.

8. Abgasausstoßvorrichtung nach einem der Ansprüche 6 bis 7, **dadurch gekennzeichnet, dass** die Luftzuführungen (60) einen tropfenförmigen Querschnitt aufweisen.

9. Abgasausstoßvorrichtung nach einem der Ansprüche 6 bis 8, **dadurch gekennzeichnet, dass** die wenigstens drei Luftzuführungen (60) derart ausgebildet sind, dass der durch das erste Rohr (10) strömende Abgasstrom durch die wenigstens drei Luftzuführungen (60) in Rotation versetzt wird.

10. Abgasausstoßvorrichtung nach einem der Ansprüche 6 bis 9, **dadurch gekennzeichnet, dass** die Abgasausstoßvorrichtung eine Fördervorrichtung aufweist, wobei die Fördervorrichtung zum Fördern von Luft durch die Luftzuführungen (60) ausgebildet ist.

11. Abgasausstoßvorrichtung nach einem der vorstehenden Ansprüche, **dadurch gekennzeichnet, dass** oberhalb des ersten Diffusorring (30) und innerhalb des ersten Rohres (10) einen zweiter Diffusorring angeordnet ist.

## Claims

1. Exhaust gas output device for a watercraft, wherein the exhaust gas output device has a first pipe (10), wherein hot exhaust gas can be directed through the first pipe (10), wherein the first pipe (10) has a circular or elliptical cross section, wherein the radius of the first pipe (10) can vary according to the height, wherein a second pipe (20) is arranged inside the first pipe (10), wherein the second pipe (20) is closed at the bottom, wherein the second pipe (20) has a circular or elliptical cross section, wherein the radius of the second pipe (20) can vary according to the height, wherein the radius of the first pipe (10) is larger than the radius of the second pipe (20), wherein ambient air can be directed through the second pipe (20), **characterized in that** a first diffuser ring (30) is arranged above the second pipe (20) and within the first pipe, wherein the first diffuser ring (30) has a circular or elliptical cross section, wherein the radius of the first diffuser ring (30) is larger on the side adjacent to the second pipe (20) than the radius of the second pipe (20) on the side adjacent to the first diffuser ring (30).

2. Exhaust gas output device according to Claim 1, **characterized in that** the radius of the first diffuser ring (30) can vary according to the height and wherein the axis of symmetry of the first diffuser ring (30) and the axis of symmetry of the second pipe (20) coincide.

3. Exhaust gas output device according to Claim 3, **characterized in that** the radius of the first diffuser ring (30) increases from the bottom up.

4. Exhaust gas output device according to one of the preceding claims, **characterized in that** a third pipe (40) is arranged above the first pipe (10), wherein the third pipe (40) has a circular or elliptical cross section, wherein the radius of the third pipe (40) can vary according to the height, wherein the radius of the third pipe (40) is larger than the radius of the first pipe (10), wherein the axis of symmetry of the first pipe (10) and the axis of symmetry of the third pipe (40) coincide.

5. Exhaust gas output device according to Claim 4, **characterized in that** a fourth pipe (50) is arranged above the third pipe (40), wherein the fourth pipe (50) has a circular or elliptical cross section, wherein the radius of the fourth pipe (50) can vary according to the height, wherein the radius of the fourth pipe (50) is larger than the radius of the third pipe (40), wherein the axis of symmetry of the third pipe (40) and the axis of symmetry of the fourth pipe (50) coincide, wherein the third pipe (40) is arranged partially within the fourth pipe (50) .

6. Exhaust gas output device according to one of the preceding claims, **characterized in that** at least three air feed ducts (60) are arranged in such a way that they direct air from outside the first pipe (10) into the interior of the second pipe (20).

7. Exhaust gas output device according to Claim 6, **characterized in that** the at least three air feed ducts (60) serve to support the second pipe (20).

8. Exhaust gas output device according to Claim 6 or 7, **characterized in that** the air feed ducts (60) have a drop-shaped cross section.

9. Exhaust gas output device according to one of Claims 6 to 8, **characterized in that** the at least three air feed ducts (60) are designed in such a way that the exhaust gas flow flowing through the first pipe (10) is set in rotation by the at least three air feed ducts (60).

10. Exhaust gas output device according to one of Claims 6 to 9, **characterized in that** the exhaust gas output device has a delivery device, wherein the delivery device is designed to deliver air through the air feed ducts (60).

11. Exhaust gas output device according to one of the preceding claims, **characterized in that** a second diffuser ring is arranged above the first diffuser ring (30) and within the first pipe (10).

## Revendications

1. Dispositif d'émission de gaz d'échappement pour un navire, le dispositif d'émission de gaz d'échappement présentant un premier tube (10), des gaz d'échappement chauds pouvant être guidés à travers le premier tube (10), le premier tube (10) présentant une section transversale circulaire ou elliptique, le rayon du premier tube (10) pouvant varier en fonction de la hauteur, à l'intérieur du premier tube (10) étant disposé un deuxième tube (20), le deuxième tube (20) étant fermé vers le bas, le deuxième tube (20) présentant une section transversale circulaire ou elliptique, le rayon du deuxième tube (20) pouvant varier en fonction de la hauteur, le rayon du premier tube (10) étant supérieur au rayon du deuxième tube (20), de l'air ambiant pouvant être guidé à travers le deuxième tube (20), **caractérisé en ce qu'**au-dessus du deuxième tube (20) et à l'intérieur du premier tube est disposé un premier anneau diffuseur (30), le premier anneau diffuseur (30) présentant une section transversale circulaire ou elliptique, le rayon du premier anneau diffuseur (30) au niveau du côté adjacent au deuxième tube (20) étant supérieur au rayon du deuxième tube (20) au niveau du côté adjacent au premier anneau diffuseur (30).

2. Dispositif d'émission de gaz d'échappement selon la revendication 1, **caractérisé en ce que** le rayon du premier anneau diffuseur (30) peut varier en fonction de la hauteur et dans lequel l'axe de symétrie du premier anneau diffuseur (30) et l'axe de symétrie du deuxième tube (20) coïncident.

3. Dispositif d'émission de gaz d'échappement selon la revendication 3, **caractérisé en ce que** le rayon du premier anneau diffuseur (30) augmente de bas en haut.

4. Dispositif d'émission de gaz d'échappement selon l'une quelconque des revendications précédentes, **caractérisé en ce qu'**au-dessus du premier tube (10) est disposé un troisième tube (40), le troisième tube (40) présentant une section transversale circulaire ou elliptique, le rayon du troisième tube (40) pouvant varier en fonction de la hauteur, le rayon du troisième tube (40) étant supérieur au rayon du premier tube (10), l'axe de symétrie du premier tube (10) et l'axe de symétrie du troisième tube (40) coïncidant.

5. Dispositif d'émission de gaz d'échappement selon la revendication 4, **caractérisé en ce qu'**au-dessus du troisième tube (40) est disposé un quatrième tube (50), le quatrième tube (50) présentant une section transversale circulaire ou elliptique, le rayon du quatrième tube (50) pouvant varier en fonction de la hauteur, le rayon du quatrième tube (50) étant supérieur au rayon du troisième tube (40), l'axe de symétrie du troisième tube (40) et l'axe de symétrie du quatrième tube (50) coïncidant, le troisième tube (40) étant disposé en partie à l'intérieur du quatrième tube (50).

6. Dispositif d'émission de gaz d'échappement selon l'une quelconque des revendications précédentes, **caractérisé en ce que** les au moins trois alimentations en air (60) sont disposées de telle sorte qu'elles conduisent de l'air depuis l'extérieur du premier tube (10) jusqu'à l'intérieur du deuxième tube (20).

7. Dispositif d'émission de gaz d'échappement selon la revendication 6, **caractérisé en ce que** les au moins trois alimentations en air (60) servent à supporter le deuxième tube (20).

8. Dispositif d'émission de gaz d'échappement selon l'une quelconque des revendications 6 et 7, **caractérisé en ce que** les alimentations en air (60) présentent une section transversale en forme de goutte.

9. Dispositif d'émission de gaz d'échappement selon l'une quelconque des revendications 6 à 8, **caractérisé en ce que** les au moins trois alimentations en air (60) sont réalisées de telle sorte que le flux de gaz d'échappement s'écoulant à travers le premier tube (10) soit mis en rotation par les au moins trois alimentations en air (60).

10. Dispositif d'émission de gaz d'échappement selon l'une quelconque des revendications 6 à 9, **caractérisé en ce que** le dispositif d'émission de gaz d'échappement présente un dispositif d'alimentation, le dispositif d' alimentation étant réalisé pour alimenter de l'air à travers les alimentations en air (60).

11. Dispositif d'émission de gaz d'échappement selon l'une quelconque des revendications précédentes, **caractérisé en ce qu'**un deuxième anneau diffuseur est disposé au-dessus du premier anneau diffuseur (30) et à l'intérieur du premier tube (10).
